# EUROPÄISCHE PATENTSCHRIFT

(11) **EP 1 733 143 B1**
(45) Veröffentlichungstag und Bekanntmachung des Hinweises auf die Patenterteilung: **18.05.2011**
(21) Anmeldenummer: 05716052.5
(22) Anmeldetag: 14.03.2005
(51) Int. Cl.: F03D 7/02, F03D 1/00

(54) **AUTOMATISCHE ARRETIERUNG EINER WINDTURBINE**
AUTOMATIC LOCKING OF A WIND TURBINE
ARRET AUTOMATIQUE D'UNE EOLIENNE

(30) Priorität: 19.03.2004 DE 102004013624
(43) Veröffentlichungstag der Anmeldung: 20.12.2006
(73) Patentinhaber: S.B. Patent Holdings ApS, 5882 Vejstrup (DK)
(72) Erfinder: STRUVE, Jan, 32130 Enger (DE); FRANKE, Michael, 49328 Melle (DE)
(74) Vertreter: Leinweber & Zimmermann
(86) Internationale Anmeldenummer: PCT/EP2005/002712
(87) Internationale Veröffentlichungsnummer: WO 2005/090780

(56) Entgegenhaltungen:
- EP-A- 1 167 755
- EP-A- 1 291 521
- WO-A-2004/111443
- US-A1- 2002 196 123
- US-A1- 2003 075 929
- E. HAU: "Windkraftanlagen" 1996, SPRINGER VERLAG , BERLIN, DE0 241430 , XP002334015 Seiten 248-249

## Beschreibung

Die Erfindung betrifft ein Verfahren zum Betreiben einer Windenergieanlage, bei dem ein Rotor der Windenergieanlage abgebremst und in einer Soll-Drehstellung bzgl. Drehungen um die Rotorachse arretiert wird sowie eine zum Ausführen derartiger Verfahren betreibbare Windenergieanlage.

Windenergieanlagen bestehen in der Regel aus einem Turm, einer auf dem Turm montierten und um eine etwa vertikal verlaufende Drehachse verdrehbaren Gondel sowie einem um eine üblicherweise etwa in Horizontalrichtung verlaufende Rotorachse drehbar an der Gondel befestigten Rotor.

Der Rotor herkömmlicher Windenergieanlagen umfaßt eine Rotornabe sowie üblicherweise eine Mehrzahl von zwei, drei oder vier Rotorblättern, wobei sich die Rotorblätter ausgehend von der Rotornabe in radialer Richtung bzgl. der Rotorachse erstrecken. Zur Anpassung der Rotoreigenschaften an die jeweils vorherrschenden Windbedingungen sind die Rotorblätter üblicherweise bzgl. radial zur Rotorachse verlaufenden Drehachsen verdrehbar. Dazu sind in der Rotornabe Hydraulikzylinder und/oder Stellmotoren mit entsprechenden Getrieben angebracht. Diese Stellmotoren sowie dem Rotor nachgeschaltete Getriebe und Generatoren, die ebenfalls üblicherweise auf der Gondel angebracht sind, stellen eine Fehlerquelle während des Betriebs der Windenergieanlage dar. Zur Reparatur und Wartung muß entsprechendes Personal die in oder in der Nähe der Rotornabe angeordneten Anlagenelemente erreichen können. Zu diesem Zweck und zur Vermeidung einer Beschädigung der Windenergieanlage muß der Rotor angehalten und arretiert werden.

Gemäß den einschlägigen Richtlinien zur Zertifizierung von Windenergieanlagen muß die Möglichkeit einer formschlüssigen Arretierung des Rotors vorgesehen sein. Dazu werden üblicherweise Bolzen oder Blockiereinrichtungen verwendet, die in drehfest mit dem Rotor verbundene und üblicherweise koaxial dazu angeordnete Scheiben eingelegt werden. Herkömmliche Arretierungsbolzen sind bzgl. Drehungen um die Rotorachse arretiert und stützen sich in der entsprechenden Drehrichtung auf der Rahmenkonstruktion der Windkraftanlage ab, um so eine formschlüssige Arretierung bzgl. Drehungen um die Rotorachse zusammenwirkend mit den drehfest mit dem Rotor verbundenen Scheiben bewirken zu können. Zum Erreichen einer Arretierungsstellung werden die Bolzen herkömmlicher Arretierungseinrichtungen manuell oder hydraulisch längs der etwa parallel zur Rotorachse verlaufenden Bolzenachse zwischen einer Freigabestellung und einer Arretierungsstellung, in der die Bolzen eine die Scheibe durchsetzende Ausnehmung durchsetzen, verstellt. Zum Erhalt der vorgeschriebenen Arretierung werden die Rotoren der Windkraftanlagen über eine aerodynamische und/oder mechanische Bremse bis zum Stillstand abgebremst. Dann wird der Arretierungsbolzen in die Arretierungsstellung verschoben, in der er die in der Scheibe vorgesehene Ausnehmung durchsetzt. Es hat sich gezeigt, daß die herkömmliche Arretierung nicht ohne Personaleinsatz auf der Gondel erfolgen kann. Dieser Personaleinsatz ist nicht nur mit erhöhten Kosten verbunden, sondern bringt auch ein erhöhtes Risiko für das Wartungspersonal mit sich, welches bei sich drehendem Rotor auf der bei modernen Windenergieanlagen in einer Höhe von 100 m oder mehr angebrachten Gondel der Windenergieanlage abgesetzt werden muß.

Die Schrift US 2003/0075929 offenbart eine Windenergieanlage mit einem Stabilisierungssystem zum Stabilisieren des Rotors in einer Parkposition, wobei die Rotorblätter bei einem Abweichen des Rotors von der Parkposition derart von einer Steuereinrichtung angesteuert werden, dass ein Drehmoment erzeugt wird, das den Rotor zurück in die Parkposition bringt. In dem Dokument EP 1 291 521 A1 ist eine Windenergieanlage mit einer Rotorsperreinrichtung beschrieben, bei der ein beweglicher Stab in Öffnungen einer Rotorscheibe zum Sperren der Rotorscheibe eingreifen kann. Die Schrift EP 1 167 755 A2 befaßt sich mit einer Vorrichtung zur Arretierung einer Welle einer Windkraftanlage mit einer mit der Welle verbindbaren Zahnscheibe und einem Arretierelement mit einem Vorsprung zum Arretieren der Zahnscheibe, wobei der Vorsprung zwischen zwei Zähne der Zahnscheibe eintauchen kann.

Angesichts dieser Probleme im Stand der Technik liegt der Erfindung die Aufgabe Angesichts dieser Probleme im Stand der Technik liegt der Erfindung die Aufgabe zugrunde, ein kostengünstiges und mit geringem Risiko ausführbares Verfahren zum Betreiben einer Windenergieanlage bereitzustellen sowie eine entsprechende Windenergieanlage anzugeben.

Erfindungsgemäß wird diese Aufgabe durch das im Ansprunch 1 angegebene Verfahren, gelöst.

Die Erfindung geht auf die Erkenntnis zurück, daß der Personaleinsatz beim Arretieren von Rotoren herkömmlicher Windenergieanlagen in erster Linie dadurch bedingt ist, daß nach Abbremsen des Rotors die Soll-Drehstellung noch nicht erreicht ist und der Arretierbolzen folglich auch nicht in eine entsprechende Ausnehmung in der Arretierscheibe eingeführt werden kann. Dann muß die Bremsanordnung die Rotorbewegung erneut freigeben. Nach erneutem Abbremsen kann wiederum versucht werden, den Arretierungsbolzen in die Ausnehmung der Arretierungsscheibe einzusetzen. Zur Vermeidung einer großen Anzahl derartiger Versuche ist die fortlaufende Kontrolle des Arretierungsvorgangs durch das Wartungspersonal erforderlich. Bei Ausführung erfindungsgemäßer Verfahren ist der Personaleinsatz bei dem Arretierungsvorgang nicht mehr notwendig, weil die Soll-Drehstellung mit geeigneten Erfassungseinrichtungen automatisch erfaßt wird, der Rotor in dieser Soll-Drehstellung angehalten werden kann und die Arretierung dann sicher und zuverlässig ohne zusätzliche Kontrolle durch Wartungspersonal automatisch erfolgen kann.

Dadurch werden die Kosten für Wartungsarbeiten deutlich reduziert und das Risiko des Wartungspersonals auf das Minimum begrenzt. Dieses Risiko ergibt sich nicht nur durch die sich drehenden Anlagenteile während des Arretierungsvorganges, sondern bereits vorher, wenn das Wartungspersonal mit Hubschraubern auf der Maschinengondel abgesetzt werden muß, weil sich die Windbedingungen schon durch einen leicht drehenden Rotor ständig ändern, wodurch das Anflugmanöver besonders kompliziert wird.

Bei erfindungsgemäßen Verfahren kann die Drehstellung des Rotors in der Soll-Drehstellung besonders einfach erkannt werden, wenn dem Rotor eine sich damit drehende Markierung zugeordnet ist, deren Lage mit einem geeigneten Positionsgeber erfaßt werden kann. Im Hinblick auf die Richtlinien zur Zertifizierung von Windenergieanlagen ist es besonders zweckmäßig, wenn zum Arretieren ein drehfest mit dem Rotor verbundenes Arretierungselement mit einem bzgl. Drehungen um die Rotorachse arretierten weiteren Arretierungselement in Eingriff gebracht wird. Dabei kann das Arretierungselement wie bei herkömmlichen Windenergieanlagen eine konzentrisch zur Rotorachse angeordnete und von mindestens einer Ausnehmung durchsetzte Scheibe aufweisen und zum Arretieren das weitere Arretierungselement in Form eines sich etwa parallel zur Rotorachse erstreckenden Arretierungsbolzens etwa parallel zur Rotorachse in die Ausnehmung eingeschoben werden, wobei sich der Arretierbolzen vorzugsweise an einer Rahmenkonstruktion der Windenergieanlage abstützt. Die Bewegung des Arretierbolzens kann elektrisch, elektromechanisch, magnetisch oder pneumatisch bewirkt werden. Als besonders vorteilhaft hat es sich erwiesen, wenn der Arretierbolzen hydraulisch in die Ausnehmung eingeschoben wird.

Bei der Durchführung erfindungsgemäßer Verfahren hat es sich zur Vermeidung von Beschädigungen der Arretierungseinrichtung und anderer Anlagenteile als besonders sinnvoll erwiesen, wenn der Rotor vorzugsweise aerodynamisch und/oder mechanisch abgebremst und die Bremse gelöst wird, sobald das weitere Arretierungselement in Eingriff gelangt mit dem drehfest mit dem Rotor verbundenen Arretierungselement. Dabei kann die Lage des weiteren Arretierungselementes und/oder des drehfest mit dem Rotor verbundenen Arretierungselementes mit einer geeigneten Positionserfassungseinrichtung erfaßt und der Arretierungsvorgang und/oder der Rotor-Bremsvorgang in Abhängigkeit von der erfaßten Lage gesteuert werden. Als besonders zweckmäßig hat es sich in diesem Zusammenhang erwiesen, wenn die mechanische Bremse freigegeben wird, sobald der Arretierbolzen teilweise in die Arretierscheibe eingefahren ist. Danach kann der Arretierungsbolzen mittels Hydraulikkraft komplett in die Scheibe eingefahren werden. Sobald der Arretierbolzen seine Endlage erreicht hat, wird über die beispielsweise in Form eines Positionsschalters verwirklichte Positionserfassungseinrichtung die Endlage des Bolzens erfaßt und der Prozeß als abgeschlossen an eine zentrale Steuereinrichtung gemeldet. Zur Erleichterung des Einschiebens des Arretierbolzens in die drehfest mit dem Rotor verbundene Scheibe kann der Bolzen an seiner bei der Einschubbewegung der Scheibe zugewandten Stirnfläche einen sich in Richtung auf diese Stirnfläche konisch verjüngenden Querschnitt aufweisen. Erfindungsgemäße Verfahren können vollautomatisch ausgeführt werden, wenn der Bremsvorgang und der Arretierungsvorgang von einer zentralen Steuereinrichtung gesteuert werden, welche ggf. über ein drahtlos übertragenes Befehlssignal angesteuert wird.

Wie der vorstehenden Erläuterung erfindungsgemäßer Verfahren zu entnehmen ist, zeichnet sich eine erfindungsgemäße Windenergieanlage im wesentlichen dadurch aus, daß dem Rotor eine Erfassungseinrichtung zum Erfassen des Erreichens einer Soll-Drehstellung und zum Erzeugen eines entsprechenden Erfassungssignals zugeordnet ist und der Rotor ansprechend auf das Erfassungssignal bei Erreichen der Soll-Drehstellung automatisch arretierbar ist.

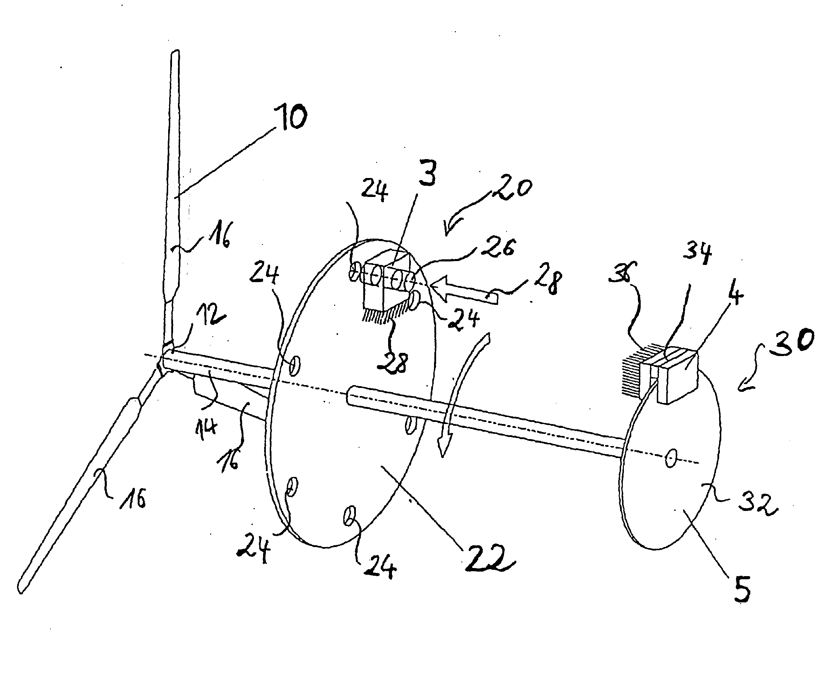

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert.

Die einzige Figur der Zeichnung zeigt eine schematische Darstellung einer erfindungsgemäßen Windenergieanlage.

Die in der Zeichnung dargestellte Windenergieanlage umfaßt einen insgesamt mit 10 bezeichneten Rotor, eine insgesamt mit 20 bezeichnete Arretierungseinrichtung sowie eine insgesamt mit 30 bezeichnete Bremsanlage. Der Rotor 10 weist insgesamt drei von einer Rotornabe 12 bzgl. der Rotorachse 14 radial abstehende Rotorflügel 16 auf. Drehfest mit der Rotorachse 14 verbunden ist eine koaxial zur Rotorachse angeordnete Arretierungsscheibe 22 der Arretierungseinrichtung 20. Die Arretierungsscheibe 22 ist von insgesamt sechs Ausnehmungen 24 durchsetzt. Die Zentren der Ausnehmungen 24 liegen auf einer koaxial zur Rotorachse 14 verlaufenden Kreislinie. Zusätzlich zu der Arretierungsscheibe 22 umfaßt die Arretierungseinrichtung 20 auch noch einen Arretierungsbolzen 26, welcher in vorgegebenen Rotor-Drehstellungen in die Ausnehmungen 24 einsetzbar ist, indem der Bolzen 26 in der durch den Pfeil 28 angedeuteten Einschubrichtung parallel zur Rotorachse 14 verschoben wird. Der Arretierungsbolzen 26 ist bzgl. Drehungen um die Rotorachse 14 arretiert und stützt sich an einer schematisch bei 28 angedeuteten Rahmenkonstruktion ab.

Die Bremsanordnung 30 umfaßt eine drehfest mit der Rotorachse 14 verbundene und koaxial dazu angeordnete Bremsscheibe 32 sowie insgesamt mit 34 bezeichnete Bremsbacken. Die Bremsbacken 34 sind parallel zur Rotorachse 14 verschiebbar und bzgl. Drehungen um die Rotorachse 14 arretiert, indem sie sich bei 36 an der Rahmenkonstruktion abstützen. Zur Arretierung des Rotors 10 wird bei Einsatz des erfindungsgemäßen Verfahrens der Rotor mit einer aerodynamischen oder der mechanischen Bremse 30 in eine solche Rotor-Drehstellung abgebremst, indem der Arretierungsbolzen 26 in eine der Ausnehmungen 24 eingeschoben werden kann. Die Rotor-Drehposition wird erkannt über eine Marke an der Arretierungsscheibe 22 und einen Positionsgeber. Sobald der Rotor in der vorgegebenen Soll-Drehstellung stillsteht, wird der Arretierungsbolzen 26 in die Arretierscheibe 22 automatisch hydraulisch eingefahren. Die Position des Arretierbolzens 26 (nicht arretiert/arretiert) wird über Positionsschalter überwacht. Sobald der Bolzen teilweise in die entsprechende Ausnehmung 24 eingefahren ist, wird die mechanische Bremse 30 geöffnet und der Bolzen kann über einen leichten Konus mittels Hydraulikkraft komplett in die Ausnehmung 24 eingeschoben werden. Hat der Bolzen seine Endlage erreicht, wird dieses über einen Positionsschalter (nicht dargestellt) erfaßt und der Prozeß als abgeschlossen an eine zentrale Steuereinrichtung (nicht dargestellt) gemeldet.

Auf diese Weise wird eine automatische Arretierung des Rotors an der Windenergieanlage erreicht. Ein wesentlicher Vorteil der automatischen Rotorarretierung ist darin zu sehen, daß bereits über eine Fernsteuerung oder einen Schalter am Bedienpult im Turmfuß der Windenergieanlage die Anlage abgebremst und arretiert werden kann. Das Servicepersonal kann anschließend die Anlage und auch die Rotornabe betreten, ohne weitere Arretierungsarbeiten ausführen zu müssen. Das erhöht die Sicherheit für das Wartungspersonal und erspart Arbeitszeit.

Die heute immer größer werdenden Anlagenleistungen und Rotordurchmesser machen immer stärkere und damit schwerere Arretiervorrichtungen erforderlich. Eine manuelle Betätigung und insbesondere auch manuelle Positionierung der Arretierscheibe ist für das Servicepersonal ausgesprochen schwierig, zumal der Rotor komplett stillstehen muß, bevor die Arretierung eingelegt wird. Sollte sich der Rotor beim Einlegen noch leicht drehen, so kann die Arretiervorrichtung aufgrund der großen Trägheitsmasse im drehenden System beschädigt werden. Ein Schaden, der nicht selten vorkommt.

Dieses Problem wird durch die automatische Arretierung unter Einsatz des erfindungsgemäßen Verfahrens gelöst.

Bei dem Einsatz auf See (offshore) ist die Zugänglichkeit der Windenergieanlagen durch See- und Eisgang eingeschränkt. Teilweise werden die Anlagen mit Hubschraubern angeflogen und Servicepersonal auf den Gondeldächern (Maschinenhaus) abgesetzt. Diese Manöver sind äußerst risikoreich, wenn sich die Windbedingungen durch einen leicht drehenden Rotor ständig ändern. Ein sicher arretierter Rotor, der unter Einsatz einer Fernsteuerung und des erfindungsgemäßen Verfahrens ohne direkten Einsatz von Servicepersonal möglich ist, erhöht die Arbeitssicherheit. Dabei kann die Arretierung nur über einen Fernwirkbefehl mit einem automatisierten System eingeleitet werden.

## Patentansprüche

1. Verfahren zum Betreiben einer Windenergieanlage, bei dem ein Rotor der Windenergieanlage abgebremst und in einer Soll-Drehstellung bzgl. Drehungen um die Rotorachse arretiert wird, wobei der Rotor in der Soll-Drehstellung angehalten und die Arretierung bei Erreichen der Soll-Drehstellung automatisch eingeleitet wird, **dadurch gekennzeichnet, dass** die Drehstellung des Rotors bzgl. der Rotorachse in der Soll-Drehstellung unter Verwendung einer Markierung und eines Positionsgebers erfaßt wird.

2. Verfahren nach Anspruch 1, **dadurch gekennzeichnet, dass** zum Arretieren ein drehfest mit dem Rotor verbundenes Arretierungselement mit einem bzgl. Drehungen um die Rotorachse arretierten weiteren Arretierungselement in Eingriff gebracht wird.

3. Verfahren nach Anspruch 2, **dadurch gekennzeichnet, dass** das Arretierungselement eine vorzugsweise konzentrisch zur Rotorachse angeordnete und von mindestens einer Ausnehmung durchsetzte Scheibe aufweist und zum Arretieren das weitere Arretierungselement in Form eines sich etwa parallel zur Rotorachse erstreckenden Arretierungsbolzens etwa parallel zur Rotorachse und vorzugsweise hydraulisch in die Ausnehmung eingeschoben wird, wobei sich der Arretierungsbolzen vorzugsweise an einer Rahmenkonstruktion der Windenergieanlage abstützt.

4. Verfahren nach einem der vorhergehenden Ansprüche, **dadurch gekennzeichnet, dass** der Rotor vorzugsweise mechanisch abgebremst und die Bremse gelöst wird, sobald das weitere Arretierungselement in Eingriff gelangt mit dem drehfest mit dem Rotor verbundenen Arretierungselement.

5. Verfahren nach einem der Ansprüche 2 bis 4, **dadurch gekennzeichnet, dass** die Lage des Arretierungselementes und/oder des weiteren Arretierungselementes erfaßt und der Arretierungsvorgang und/oder der Rotor-Bremsvorgang in Abhängigkeit von der erfaßten Lage gesteuert wird.

6. Windenergieanlage zur Ausführung eines Verfahrens nach einem der vorhergehenden Ansprüche, mit einem bzgl. einer Rotorachse drehbaren Rotor und einer zum Arretieren des Rotors in einer Soll-Drehstellung bzgl. der Rotorachse betreibbaren Arretierungseinrichtung, wobei die Arretierungseinrichtung zum automatischen Arretieren des Rotors bei Erreichen der Soll-Drehstellung betreibbar ist, **dadurch gekennzeichnet, dass** der Arretierungseinrichtung eine zum Erfassen der Soll-Drehstellung des Rotors und zum Erzeugen eines entsprechenden Erfassungssignals betreibbare Erfassungseinrichtung mit einem Positionsgeber und einer drehfest mit dem Rotor verbundenen Markierung zugeordnet ist und die Arretierungseinrichtung ansprechend auf das Erfassungssignal zum automatischen Arretieren des Rotors betreibbar ist.

7. Windenergieanlage nach Anspruch 6, **dadurch gekennzeichnet, dass** die Arretierungseinrichtung ein drehfest mit dem Rotor verbundenes Arretierungselement und eine bzgl. Drehungen um die Rotorachse arretiertes Arretierungselement aufweist, wobei die Arretierungselemente in Eingriff miteinander gebracht werden können.

8. Windenergieanlage nach Anspruch 7, **dadurch gekennzeichnet, dass** das Arretierungselement eine koaxial zur Rotorachse verlaufende und von mindestens einer Ausnehmung durchsetzte Scheibe aufweist und das weitere Arretierungselement einen mit der Ausnehmung in Eingriff überführbaren Bolzen umfaßt.

9. Windenergieanlage nach Anspruch 8, **dadurch gekennzeichnet, dass** der Bolzen in einer vorzugsweise parallel zur Rotorachse verlaufenden Einführrichtung von einer Freigabestellung in eine Arretierungsstellung, in der er in der die Scheibe durchsetzenden Ausnehmung aufgenommen ist, verschiebbar ist.

10. Windenergieanlage nach Anspruch 9, **dadurch gekennzeichnet, dass** sich der Querschnitt des Bolzens in einer senkrecht zur Bolzenachse verlaufenden Schnittebene längs eines in der Freigabestellung dem Arretierungselement zugewandten Endabsdchnitts vorzugsweise konisch verjüngt.

11. Wndenergieanlage nach einem der Ansprüche 8 bis 10, **dadurch gekennzeichnet, dass** der Bolzen hydraulisch verschiebbar ist.

12. Windenergieanlage nach einem der Ansprüche 7 bis 11, **dadurch gekennzeichnet, dass** der Arretierungseinrichtung mindestens eine zum Erfassen der Position mindestens eines Arretierungselementes betreibbare Positionserfassungseinrichtung zugeordnet ist.

13. Windenergieanlage nach einem der Ansprüche 6 bis 12, **gekennzeichnet durch** eine Steuereinrichtung, mit der der Arretierungsvorgang in Abhängigkeit von der mit der Erfassungseinrichtung erfaßten Rotor-Drehstellung und/oder der mit der Positionserfassungseinrichtung erfaßten Lage des Arretierungselementes steuerbar ist.

14. Windenergieanlage nach einem der Ansprüche 6 bis 13, **gekennzeichnet durch** eine Bremsanordnung zum Abbremsen der Rotordrehung.

15. Windenergieanlage nach Anspruch 14, **dadurch gekennzeichnet, dass** die Bremsanordnung mit der Steuereinrichtung in Abhängigkeit von der mit der Positionserfassungseinrichtung erfaßten Lage des Arretierungselementes steuerbar ist.

16. Windenergieanlage nach einem der Ansprüche 13 bis 15, **dadurch gekennzeichnet, dass** die Steuereinrichtung zum Betätigen der Bremsanordnung und/oder der Arretierungseinrichtung ansprechend auf ggf. drahtlos übertragene Befehlssignale betreibbar ist.

17. Arretierungseinrichtung für eine Windenergieanlage nach einem der Ansprüche 6 bis 16.

## Claims

1. A method for operating a wind turbine, wherein a rotor of the wind turbine is decelerated and is locked in a desired rotational position with respect to rotations about the rotor axis, the rotor being stopped in the desired rotational position and the locking being automatically initiated upon reaching the desired rotational position, **characterised in that** the rotational position of the rotor with respect to the rotor axis in the desired rotational position is recorded using a marker and a position sensor.

2. The method according to Claim 1, **characterised in that** in order to lock a locking element non-rotatably connected to the rotor it is engaged with a further locking element that is locked with respect to rotations about the rotor axis.

3. The method according to Claim 2, **characterised in that** the locking element has a disc arranged preferably concentrically to the rotor axis and through which at least one recess passes, and in order to lock the further locking element is pushed in the form of a locking bolt extending approximately parallel to the rotor axis approximately parallel to the rotor axis and preferably hydraulically into the recess, the locking bolt preferably being supported against a frame structure of the wind turbine.

4. The method according to any of the preceding claims, **characterised in that** the rotor is preferably decelerated mechanically, and the brake is released as soon as the further locking element engages with the locking element connected non-rotatably to the rotor.

5. The method according to any of Claims 2 to 4, **characterised in that** the position of the locking element and/or of the further locking element is recorded and the locking process and/or the rotor braking process is controlled dependently upon the position recorded.

6. A wind turbine for implementing a method according to any of the preceding claims, having a rotor rotatable with respect to a rotor axis and a locking device that can be operated in order to lock the rotor in a desired rotational position with respect to the rotor axis, it being possible to operate the locking device in order to automatically lock the rotor when it reaches the desired rotational position, **characterised in that** a recording device that can be operated in order to record the desired rotational position of the rotor and in order to generate a corresponding recording signal with a position sensor and a marker connected non-rotatably to the rotor is assigned to the locking device, and the locking device can be operated in response to the recording signal in order to lock the rotor automatically.

7. The wind turbine according to Claim 6, **characterised in that** the locking device has a locking element connected non-rotatably to the rotor and a locking element locked with respect to rotations about the rotor axis, it being possible to engage the locking elements with one another.

8. The wind turbine according to Claim 7, **characterised in that** the locking element has a disc extending coaxially to the rotor axis and through which at least one recess passes, and the further locking element comprises a bolt which can be moved to engage with the recess.

9. The wind turbine according to Claim 8, **characterised in that** the bolt can be shifted in a direction of insertion preferably extending parallel to the rotor axis from a release position into a locking position in which it is accommodated in the recess passing through the disc.

10. The wind turbine according to Claim 9, **characterised in that** the cross-section of the bolt tapers preferably conically in a sectional plane extending perpendicularly to the bolt axis along an end section facing towards the locking element in the release position.

11. The wind turbine according to any of Claims 8 to 10, **characterised in that** the bolt can be shifted hydraulically.

12. The wind turbine according to any of Claims 7 to 11, **characterised in that** at least one position recording device that can be operated in order record the position of at least one locking element is assigned to the locking device.

13. The wind turbine according to any of Claims 6 to 12, **characterised by** a control device with which the locking process can be controlled dependently upon the rotor rotational position recorded by the recording device and/or the position of the locking element recorded with the position recording device.

14. The wind turbine according to any of Claims 6 to 13, **characterised by** a brake arrangement for decelerating the rotation of the rotor.

15. The wind turbine according to Claim 14, **characterised in that** the brake arrangement can be controlled by the control device dependently upon the position of the locking element recorded with the position recording device.

16. The wind turbine according to any of Claims 13 to 15, **characterised in that** the control device can be operated in order to actuate the brake arrangement and/or the locking device in response to optionally wirelessly transmitted command signals.

17. A locking device for a wind turbine according to any of Claims 6 to 16.

## Revendications

1. Procédé de fonctionnement d'une installation éolienne, dans lequel le rotor de l'installation éolienne est freiné et verrouillé dans une position de rotation de consigne eu égard à des rotations autour de l'axe de rotor, le rotor étant arrêté dans ladite position de rotation de consigne et son verrouillage étant déclenché de manière automatique une fois la position de rotation de consigne atteinte, **caractérisé en ce que** la position de rotation du rotor par rapport à l'axe de rotor est détectée comme étant la position de rotation de consigne au moyen d'un repère et d'un indicateur de position.

2. Procédé selon la revendication 1, **caractérisé en ce que**, pour le verrouillage, un élément de verrouillage solidaire en rotation du rotor est amené à s'emboîter avec un autre élément de verrouillage qui est verrouillé eu égard à des rotations autour de l'axe de rotor.

3. Procédé selon la revendication 2, **caractérisé en ce que** l'élément de verrouillage présente un disque monté de préférence de manière concentrique par rapport à l'axe de rotor et percé d'au moins un évidement et **en ce que**, pour le verrouillage, l'autre élément de verrouillage sous la forme d'un boulon de verrouillage s'étendant de manière essentiellement parallèle par rapport à l'axe de rotor est introduit de manière sensiblement parallèle à l'axe de rotor et de préférence par voie hydraulique dans l'évidement, le boulon de verrouillage prenant de préférence appui contre une structure cadre de l'installation éolienne.

4. Procédé selon l'une des revendications précédentes, **caractérisé en ce que** le rotor est freiné de préférence par voie mécanique et les freins sont relâchés dès que l'autre élément de verrouillage s'est emboîté avec l'élément de verrouillage solidaire en rotation du rotor.

5. Procédé selon l'une des revendications 2 à 4, **caractérisé en ce que** la position de l'élément de verrouillage et/ou de l'autre élément de verrouillage est détectée et le processus de verrouillage et/ou le processus de freinage du rotor est commandé en fonction de la position détectée.

6. Installation éolienne permettant de mettre en oeuvre un procédé selon l'une des revendications précédentes, comportant un rotor susceptible de tourner par rapport à un axe de rotor ainsi qu'un dispositif de verrouillage pouvant être activé pour verrouiller ledit rotor dans une position de rotation de consigne par rapport à l'axe de rotor, dans laquelle le dispositif de verrouillage peut être activé pour verrouiller automatiquement le rotor une fois la position de rotation de consigne atteinte, **caractérisée en ce qu'**il est associé au dispositif de verrouillage un dispositif de détection, qui peut être activé pour détecter la position de rotation de consigne du rotor et produire un signal de détection correspondant, et qui comporte un indicateur de position et un repère solidaire en rotation du rotor, et **en ce que** le dispositif de verrouillage peut être actionné en fonction du signal de détection pour ainsi verrouiller automatiquement le rotor.

7. Installation éolienne selon la revendication 6, **caractérisée en ce que** le dispositif de détection présente un élément de verrouillage solidaire en rotation du rotor et un élément de verrouillage verrouillé eu égard à des rotations autour de l'axe de rotor, les éléments de verrouillage pouvant être amenés à s'emboîter l'un avec l'autre.

8. Installation éolienne selon la revendication 7, **caractérisée en ce que** l'élément de verrouillage présente un disque s'étendant de manière coaxiale par rapport à l'axe de rotor et percée d'au moins un évidement, et l'autre élément de verrouillage comprend un boulon susceptible de venir s'emboîter avec l'évidement.

9. Installation éolienne selon la revendication 8, **caractérisée en ce que** le boulon est déplaçable dans une direction d'introduction de préférence parallèle à l'axe de rotor pour passer d'une position de non-verrouillage à une position de verrouillage dans laquelle il loge dans l'évidement dont est percé le disque.

10. Installation éolienne selon la revendication 9, **caractérisée en ce que** la section transversale du boulon se rétrécit de préférence de manière conique dans un plan de coupe vertical par rapport à l'axe du boulon, le long d'une section terminale tournée vers l'élément de verrouillage dans la position de non-verrouillage.

11. Installation éolienne selon l'une des revendications 8 à 10, **caractérisée en ce que** le boulon est déplaçable par voie hydraulique.

12. Installation éolienne selon l'une des revendications 7 à 11, **caractérisée en ce qu'**il est associé au dispositif de verrouillage au moins un dispositif de détection de position pouvant être activé pour détecter la position d'au moins un élément de verrouillage.

13. Installation éolienne selon l'une des revendications 6 à 12, **caractérisée par** un dispositif de commande permettant de commander le processus de verrouillage en fonction de la position de rotation du rotor détectée par le dispositif de détection et/ou de la position de l'élément de verrouillage détectée par le dispositif de détection de position.

14. Installation éolienne selon l'une des revendications 6 à 13, **caractérisée par** un dispositif de freinage permettant de freiner la rotation du rotor.

15. Installation éolienne selon la revendication 14, **caractérisée en ce que** le dispositif de freinage peut être commandé par le dispositif de commande en fonction de la position de l'élément de verrouillage détectée par le dispositif de détection de position.

16. Installation éolienne selon l'une des revendications 13 à 15, **caractérisée en ce que** le dispositif de commande peut être activé en fonction de signaux de commande transmis éventuellement sans fil pour actionner le dispositif de freinage et/ou le dispositif de verrouillage.

17. Dispositif de verrouillage pour une installation éolienne selon l'une des revendications 6 à 16.
